# DEMANDE DE BREVET EUROPEEN

(11) **EP 4 564 090 A1**
(43) Date de publication de la demande: **04.06.2025**
(21) Numéro de dépôt: 23307130.7
(22) Date de dépôt: 04.12.2023
(51) Int. Cl.: G03B 5/06, G03B 17/14

(54) **DISPOSITIF DE RÉGLAGE COMPACT D'UN OBJECTIF OPTIQUE D'UN APPAREIL DE PRISES DE VUES POUR UNE APPLICATION DE TYPE SCHEIMPFLUG**

(30) Priorité: 01.12.2023 FR 2313471
(71) Demandeur: Institut National Polytechnique de Toulouse, 31029 Toulouse Cedex 4 (FR); CENTRE NATIONAL DE LA RECHERCHE SCIENTIFIQUE, 75016 Paris (FR); UNIVERSITE TOULOUSE III - PAUL SABATIER, 31062 Toulouse Cedex 9 (FR)
(72) Inventeur: CAZIN, Sébastien, 31400 Toulouse (FR); MOUNEIX, Laurent, 31400 Toulouse (FR); SOEPARNO, Rudy, 31400 Toulouse (FR)
(74) Mandataire: Ipsilon

(57) **Abrégé**

L'invention concerne un dispositif de réglage (100) d'un objectif optique (2) d'un appareil (3) de prises de vues, comprenant un dispositif de réglage (100) selon l'invention, et un procédé à régler ledit appareil de prises de vues.

Selon l'invention, le dispositif de réglage (100) comprend une embase (101) de fixation ajourée et deux bagues biseautées, dont une première bague (102) est montée en rotation sur ladite embase (101) et dont une deuxième bague (103) est montée en rotation sur ladite première bague (102), ladite deuxième bague (103) étant destinée à recevoir l'objectif optique (2) de l'appareil (3) de prises de vues.

## Description

La présente invention concerne un dispositif de réglage d'un objectif optique d'un appareil de prises de vues pour une application de type Scheimpflug.

Pour rappel, lorsqu'un angle est formé entre l'axe optique d'un objectif optique d'un appareil de prises de vues, tel qu'une caméra, et la normale à un plan d'observation, une solution pour faire la mise au point sur l'ensemble du plan incliné consiste à fermer le diaphragme de l'objectif optique pour accroître la profondeur de champ. Or, le principal inconvénient de cette fermeture de diaphragme se traduit par une perte de luminosité qui va se répercuter sur la qualité des images obtenues par l'appareil de prises de vues sachant qu'il n'est pas toujours possible de compenser ce manque de luminosité (émissions propres des flammes par exemple) ou alors à des coûts financiers non négligeables (au prix de sources laser plus puissantes par exemple).

Pour s'affranchir de ce problème de luminosité, c'est-à-dire éventuellement pouvoir travailler à pleine ouverture tout en optimisant la profondeur de la zone de netteté sur le plan d'observation, il convient de respecter le principe de Scheimpflug. Ce principe énonce qu'en configuration inclinée de l'axe optique par rapport au plan d'observation, le plan d'observation, ou de netteté, passe par l'intersection du plan du capteur (plan image) de l'appareil de prises de vues, et du plan passant par le centre optique de l'objectif et normal à l'axe optique. En pratique, pour se placer dans les conditions d'application de la règle de Scheimpflug, il faut jouer sur l'orientation de l'objectif optique en réalisant un décalage angulaire entre ledit objectif optique et le plan du capteur, de façon à obtenir une zone de netteté optimale dans le plan d'observation.

Un dispositif de réglage selon l'invention est conçu pour être monté sur un appareil de prises de vues tel qu'une caméra, et permettre d'orienter l'objectif optique de cette caméra suivant un très grand nombre de directions différentes dans l'espace de façon à accroître les configurations possibles d'obtention d'une correction de type Scheimpflug.

Le dispositif de réglage selon l'invention est très compact afin de conserver le tirage optique nominal. Ce dispositif peut apporter une correction suivant 2 angles (dérapage et incidence). Ledit dispositif de réglage permet de travailler à tirage nominal (sans perte de luminosité et présence d'aberrations optiques) et sans vignettage. La monture dudit dispositif de réglage est solide permettant de supporter des optiques lourdes. Ledit dispositif de réglage est utilisable dans des expériences d'imagerie avec accès optiques complexes (angles importants entre l'axe optique et le plan d'observation). Ledit dispositif de réglage est particulièrement adapté aux gros capteurs 24mm x 36mm de certaines caméras rapides.

L'invention a pour objet un dispositif de réglage d'un objectif optique d'un appareil de prises de vues, conçu pour être monté dans ledit appareil de prises de vues entre un capteur de cet appareil et ledit objectif optique.

Selon l'invention, le dispositif de réglage comprend une embase de fixation ajourée qui permet de s'adapter spécifiquement à une face avant de l'appareil de prises de vues, et deux bagues biseautées, dont une première bague est montée en rotation sur ladite embase et dont une deuxième bague est montée en rotation sur ladite première bague, ladite deuxième bague étant destinée à recevoir l'objectif optique de l'appareil de prises de vues. A l'issue du réglage des différentes rotations, le dispositif de réglage peut être verrouillé au moyen des vis pointeau situées sur le pourtour de la première bague. De façon plus précise, chacune des bagues est de forme cylindrique, et présente une première extrémité s'inscrivant dans un plan qui est perpendiculaire à l'axe de révolution de la bague considérée, et une deuxième extrémité s'inscrivant au moins partiellement dans un plan incliné qui n'est pas perpendiculaire audit axe de révolution. La première extrémité et la deuxième extrémité de chaque bague sont à considérer le long de l'axe de révolution de chacune des deux bagues. Les deux bagues sont montées sur l'embase de sorte que la première extrémité de la première bague soit au contact de ladite embase, et de sorte que la première extrémité biseautée de la deuxième bague soit située en regard de la deuxième extrémité biseautée de la première bague.

Préférentiellement, l'embase est de forme circulaire et possède une ouverture centrale. Le dispositif de réglage est monté dans l'appareil de prises de vues de sorte que le capteur de cet appareil soit situé d'un côté de l'embase, et l'ensemble composé de la première bague et de la deuxième bague soit situé de l'autre côté de ladite embase, ledit capteur étant placé à l'intérieur dudit appareil et les deux bagues saillant vers l'extérieur de celui-ci. Grâce à la superposition de ces deux bagues biseautées, l'objectif optique de l'appareil de prises de vues peut occuper une multiplicité de positions inclinées par rapport à la normale à un plan dans lequel s'inscrirait le capteur, entre :
- une première position extrême pour laquelle l'objectif optique est aligné le long de cet axe optique et pour laquelle le tirage optique nominal de l'objectif optique est parfaitement respecté, et
- une deuxième position extrême pour laquelle il est incliné par rapport audit axe optique avec une amplitude angulaire maximale. Grâce à un tel arrangement, l'angle entre l'axe du capteur de l'appareil de prise de vues et l'axe optique de l'objectif est réglé par la rotation des deux bagues biseautées, l'orientation de l'angle ainsi réglé peut être modifiée par la rotation de la première bague biseautée par rapport à l'embase. De ce fait, il est possible d'appliquer le principe de Scheimpflug avec l'appareil de prises de vues sur lequel est monté le dispositif de réglage selon l'invention, dans le but d'améliorer la netteté des images obtenues avec ledit appareil de mesure, en conservant le tirage nominal et donc en limitant les aberrations optiques et pertes de luminosité.

Selon une caractéristique possible de l'invention, la deuxième bague est au contact de la première bague via leurs faces biseautées respectives et pivote sur ladite première bague en demeurant au contact de celle-ci. La base biseautée de la première bague est elliptique, la rotation est assurée par un évidement circulaire de la pièce au niveau de la gorge de la première bague permettant l'insertion de la deuxième bague. De cette manière, le pivotement des bagues sur l'embase et le positionnement des bagues l'une par rapport à l'autre est bien maitrisé, sans la présence de pièces intermédiaires qui pourraient fausser leur positionnement au sein du dispositif de réglage.

Selon une caractéristique possible de l'invention, les deux bagues présentent chacune un biseau incliné identique, de préférence de 10° permettant une variation angulaire maximale de 20° de l'axe de l'objectif optique par rapport à la normale au plan dans lequel s'inscrit le capteur. La présence d'un tel biseau est en général suffisante pour permettre d'appliquer efficacement le principe de Scheimpflug avec l'appareil de prises de vues sur lequel serait monté le dispositif de réglage selon l'invention.

Selon une caractéristique possible de l'invention, le dispositif de réglage comprend une troisième bague destinée à recevoir l'objectif optique et une quatrième bague montée pivotante sur la deuxième bague, la troisième bague étant montée en translation sur la quatrième bague, une mise en rotation de la quatrième bague sur la deuxième bague permettant de placer l'axe de translation entre la troisième bague et la quatrième bague le long d'un axe de plus grande pente obtenu par la position de la première bague et de la deuxième bague, le mouvement en translation étant destiné à déplacer l'objectif optique pour recentrer en permanence l'image sur le capteur de l'appareil de prises de vues. De cette manière, une fois que la première bague et la deuxième bague ont été réglées pour obtenir l'effet Scheimpflug, à savoir être dans les conditions d'application de la loi de Scheimpflug, il arrive que l'image obtenue par l'appareil de prises de vue soit décalée par rapport au capteur optique dudit appareil de prises de vues; il s'en suit alors un vignettage partiel. La mise en translation de la troisième bague portant l'objectif optique sur la quatrième bague, permet de ramener cette image sur la totalité de la surface du capteur optique. Comme il est également possible qu'à l'issue du réglage de la première bague et de la deuxième bague, l'axe de translation ne soit pas positionné le long de l'axe de plus grande pente, la quatrième bague à laquelle est fixée la troisième bague va subir un mouvement préalable de rotation pour amener l'axe de translation le long de l'axe de plus grande pente, avant de procéder au mouvement de translation de la troisième bague sur la quatrième bague. La présence de la quatrième bague qui est montée en rotation sur la deuxième bague accroît de façon significative les possibilités d'utilisation d'un dispositif de réglage selon l'invention en permettant au mouvement de translation de la troisième bague relativement à la deuxième bague, d'être toujours orienté suivant l'axe de plus grande pente. Préférentiellement, la quatrième bague est fine et de faible épaisseur. De façon avantageuse, l'épaisseur de cette quatrième bague est inférieure ou égale à 3mm.

Selon une caractéristique possible de l'invention, la troisième bague comprend une partie inférieure qui est montée en translation sur la quatrième bague et une partie supérieure qui est montée sur ladite partie inférieure, la partie inférieure et la partie supérieure ayant chacune la forme d'une bague et étant superposées l'une sur l'autre. Par rapport à la quatrième bague, la partie inférieure de la troisième bague ne peut subir qu'un mouvement de translation.

Selon une caractéristique possible de l'invention, la partie supérieure de la troisième bague a une rotation complémentaire autour de son axe de révolution. Cette rotation complémentaire de la partie supérieure de la troisième bague autour de son axe de révolution permet de faire tourner l'objectif optique autour de l'axe optique pour aligner, entre autres, d'éventuels masques situés à l'arrière de l'objectif optique avec la forme et la position du capteur utilisé dans l'appareil de prises de vues.

Selon une caractéristique possible de l'invention, la partie supérieure de la troisième bague est destinée à recevoir l'objectif optique et possède des moyens de fixation destinés à coopérer avec des moyens de fixation complémentaires dudit objectif optique. Une fois que l'objectif optique est fixé à la partie supérieure de la troisième bague, il ne dispose d'aucune possibilité de déplacement relativement à ladite partie supérieure. Avantageusement, l'objectif optique qui est généralement de forme cylindrique est inséré dans la partie supérieure de la troisième bague avant d'être fixé à celle-ci. La fixation de l'objectif optique à la partie supérieure de la troisième bague peut par exemple s'effectuer au moyen d'une interaction de type baïonnette.

Selon une caractéristique possible de l'invention, la première bague, la deuxième bague la troisième bague et la quatrième bague sont réalisées en métal. Un tel matériau permet d'obtenir une bonne précision de montage des bagues, sans observer de dérive de positionnement de celles-ci au cours du temps. De plus, des bagues réalisées en métal offrent une bonne résistance mécanique face au poids des optiques et permettent de réaliser des réglages avec une meilleure précision.

Selon une caractéristique possible de l'invention, la première bague, la deuxième bague, la troisième bague et la quatrième bague sont fabriquées au moyen d'une imprimante 3D. Certains assemblages peuvent s'avérer impossibles à réaliser en usinage conventionnel en raison de la forme spécifique des pièces impliquées et imbriquées entre elles. En effet, certaines pièces peuvent nécessiter des formes spécifiques qui, une fois qu'elles ont été fabriquées, s'avéreraient impossibles à inclure dans d'autres pièces. Une impression métallique 3D permet de fabriquer les pièces de façon progressive et simultanée, et directement dans leur configuration d'interaction pour obtenir un dispositif de réglage solide permettant de supporter des optiques lourdes.

Selon une caractéristique possible de l'invention, à issue du réglage des différentes rotations et/ou translations, le dispositif de réglage est verrouillé au moyen des vis pointeau situées sur le pourtour de chacune des bagues. Ces vis pointeau facilitent le réglage du dispositif de réglage.

L'invention a pour autre objet un appareil de prises de vues comprenant un capteur, un objectif optique et un dispositif de réglage selon l'invention.

Selon l'invention, l'embase présente une surface externe sur laquelle sont montées la première bague et la deuxième bague biseautées, et une surface interne qui est parallèle à ladite surface externe, et le dispositif de réglage étant monté dans ledit appareil de prises de vues de sorte que la première bague, la deuxième bague et l'objectif optique saillent vers l'extérieur de l'appareil de prises de vues et de sorte que la surface interne soit située en regard du capteur. L'insertion du dispositif de réglage dans l'appareil de prises de vues doit s'effectuer sans avoir à modifier en profondeur les caractéristiques structurelles de cet appareil de prises de vues. Le capteur se retrouve à l'intérieur de l'appareil de prises de vues, tandis que le dispositif de réglage saille vers l'extérieur dudit appareil. L'ensemble des bagues et l'embase doivent permettre d'assurer un passage permettant à un objet visé par l'appareil de prises de vues de se projeter sur le capteur. Le réglage de la position des bagues peut se faire manuellement ou au moyen d'au moins un moteur pouvant par exemple être de source électrique, ledit moteur permettant par exemple de déplacer avec une grande précision une vis sans fin pour assurer le mouvement de translation des bagues concernées mais également le mouvement de rotation des bagues entre elles pour un réglage automatisé de l'angle par exemple.

Selon une caractéristique possible de l'invention, l'appareil de prises de vues est délimité par un boitier, l'embase du dispositif de réglage fermant ledit boitier en étant dans la continuité d'une paroi dudit boitier. L'insertion du dispositif de réglage dans l'appareil de prises de vues ne doit pas gêner l'utilisation de cet appareil de prises de vues. Elle s'effectue donc naturellement, sans engendrer d'encombrement majeur qui pourrait nuire au fonctionnement dudit appareil de prises de vues.

L'invention a pour autre objet d'un procédé de réglage d'un appareil de prises de vues possédant un objectif optique, une caméra et un dispositif de réglage conforme à l'invention, ledit procédé comprend les étapes suivantes :
- le dispositif de réglage est monté sur la caméra par son embase spécifique,
- l'objectif optique est monté sur le dispositif de réglage au niveau de la partie supérieure de sa troisième bague,
- l'angle entre la normale au plan du capteur de la caméra et l'axe optique de l'objectif est réglé par la rotation des deux bagues biseautées entre elles,
- l'orientation de l'angle ainsi réglé est modifiée par la rotation de la première bague biseautée par rapport à l'embase,
- pour recentrer l'image obtenue à travers l'objectif optique par rapport au capteur de la caméra, l'objectif optique est décalé grâce à la translation de la troisième bague sur la quatrième bague, ledit mouvement en translation pouvant être précédé d'un mouvement de rotation de l'ensemble constitué par la troisième bague et la quatrième bague sur la deuxième bague, grâce à ladite quatrième bague qui est montée en rotation sur ladite deuxième bague,
- enfin, l'orientation suivant l'axe optique de l'objectif optique est modifiée grâce à la rotation de la partie supérieure de la troisième bague sur la partie inférieure afin notamment d'aligner les masques de l'objectif optique par rapport au capteur de la caméra.

On donne ci-après une description détaillée de mode de réalisation préféré d'un dispositif de réglage et d'appareil de prises de vues selon l'invention, en se référant aux figures suivantes :
[FIG. 1] La figure 1 est une vue schématique d'une caméra expliquant le principe de Scheimpflug,
[FIG. 2] La figure 2 est une vue en perspective d'une caméra montrant l'emplacement d'un dispositif de réglage selon l'invention,
[FIG. 3] La figure 3 est une vue en perspective d'un dispositif de réglage selon l'invention dans une première configuration sans angle d'inclinaison,
[FIG. 4] La figure 4 est une vue en perspective d'un dispositif de réglage selon l'invention avec un angle d'inclinaison maximum,
[FIG. 5] La figure 5 est une vue en perspective d'un dispositif de réglage selon l'invention pour lequel le réglage de la première bague et de la deuxième bague pour obtenir l'effet Scheimpflug aboutit à un positionnement de l'axe de translation entre la troisième bague et la quatrième bague qui ne correspond pas à l'axe de plus grande pente,
[FIG. 6] La figure 6 est une vue en perspective du dispositif de réglage de la figure 5, après une mise en rotation de la quatrième bague pour placer l'axe de translation suivant l'axe de plus grande pente, la troisième bague ayant été translatée le long de la quatrième bague, l'inclinaison dudit dispositif de réglage.

Lorsqu'un angle est formé entre l'axe optique 1 de l'objectif optique 2 de la caméra 3 et la normale 4 au plan d'observation 5, une solution pour faire la mise au point sur l'ensemble du plan incliné consiste à fermer le diaphragme de l'objectif optique 2 pour accroître la profondeur de champ. Mais un inconvénient lié à cette solution est une perte de luminosité qui peut dégrader la qualité des images obtenues par ladite caméra 3.

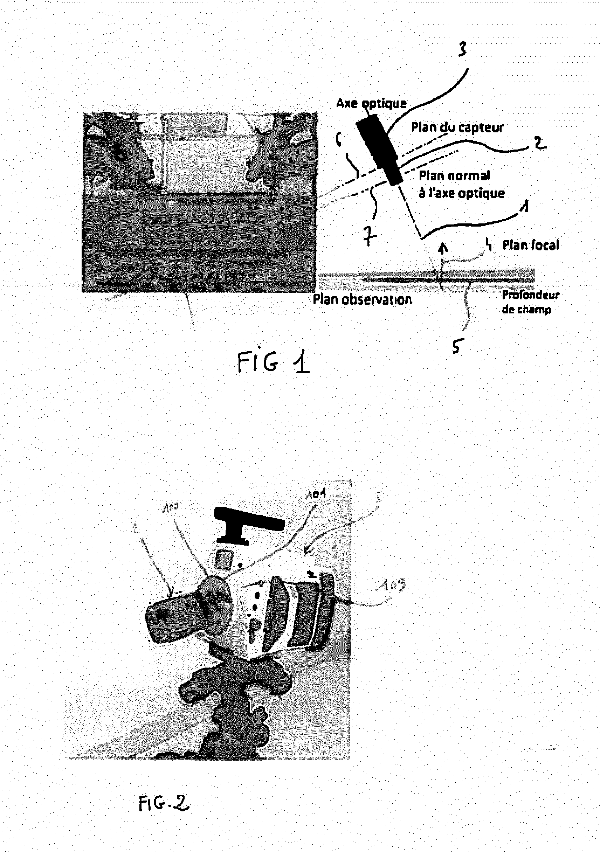

Pour continuer à travailler à pleine ouverture tout en optimisant la profondeur de la zone de netteté, il convient d'appliquer le principe de Scheimpflug, qui est illustré à la figure 1 : le plan d'observation 5 ou de netteté, passe par l'intersection du plan 6 du capteur ou plan image, et du plan 7 passant par le centre optique de l'objectif optique 2 et normal à l'axe optique 1. En pratique, le paramètre ajustable est constitué par l'orientation de l'objectif optique 2 pour effectuer un décalage angulaire par rapport au plan 6 du capteur, de manière à se placer dans les conditions de Scheimpflug et obtenir une zone de netteté optimale. Actuellement des dispositifs de réglage de l'objectif optique 2 sont insérés sur la face avant des caméras 3, de manière à obtenir le décalage angulaire souhaité entre le plan 6 du capteur et le plan 7 passant par le centre de l'objectif optique 2 et normal à l'axe optique 1 pour appliquer le principe de Scheimpflug. Or, les dispositifs de réglage disponibles sur le marché, ne permettent pas aujourd'hui de répondre aux besoins de certaines applications. Des problèmes sont en particulier rencontrés en présence de gros capteurs utilisés par exemple dans certaines caméras rapides. Une épaisseur importante entre l'objectif optique 2 et le capteur va engendrer :
- une augmentation du tirage optique avec pour conséquence une perte de luminosité, une modification du grandissement, la perte de la mise au point à l'infini,
- la présence d'aberrations optiques et
- la présence de vignettage traduisant un décentrage important de l'image formée par rapport au capteur.

De plus, certains dispositifs de réglage actuels offrent un choix restreint de positions angulaires possibles pour l'objectif optique 2 en ne proposant une correction uniquement avec un angle dans le plan horizontal, lesdits dispositifs étant bien souvent encombrants.

Un dispositif de réglage 100 selon l'invention qui est notamment illustré à la figure 2, se monte sur une caméra 3 et permet de déplacer facilement et de façon précise, l'objectif optique 2 pour se placer avec maitrise dans les conditions de Scheimpflug.

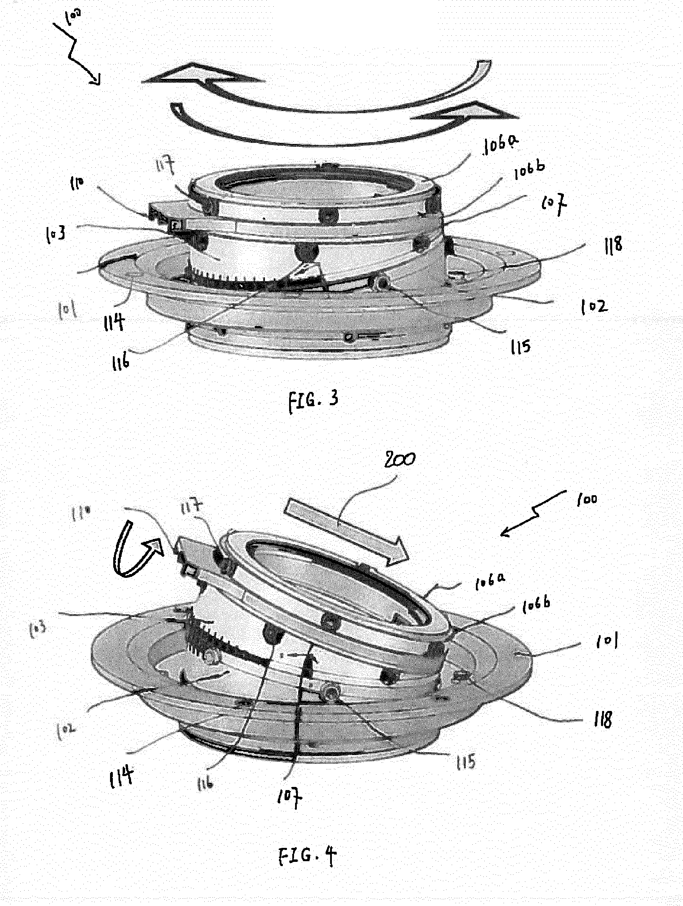

En se référant aux figures 3, 4, 5, 6, un dispositif de réglage100 selon l'invention comprend une embase 101 de fixation ajourée, et deux bagues biseautées 102, 103, dont une première bague 102 est montée en rotation sur ladite embase 101, et dont une deuxième bague 103 est montée en rotation sur ladite première bague 102. Chacune des deux bagues 102, 103 est de forme cylindrique, et présente une première extrémité ouverte s'inscrivant dans un plan qui est perpendiculaire à l'axe de révolution de la bague considérée 102, 103, et une deuxième extrémité s'inscrivant dans un plan incliné qui n'est pas perpendiculaire audit axe de révolution. En d'autres termes, la deuxième extrémité est biseautée. La première bague 102 et la deuxième bague 103 sont disposées l'une par rapport à l'autre de façon concentrique, leurs axes de révolution se confondant dans une première position, sans angle d'inclinaison comme cela est illustré à la figure 3. De ce fait, le dispositif de réglage peut être utilisé lorsqu'on n'est pas en configuration de Scheimpflug (annulation possible de l'angle sans avoir à retirer la monture). La première bague 102 est montée en rotation sur l'embase 101 autour de son axe de révolution, et la deuxième bague 103 est montée en rotation sur la première bague 102 autour d'un axe perpendiculaire à la surface biseauté de la deuxième extrémité. La base biseautée de la première bague 102 est elliptique, la rotation étant assurée par un évidement circulaire de la pièce au niveau d'une gorge permettant l'insertion de la deuxième bague 103. Les deux bagues 102, 103 sont montées sur l'embase 101 de sorte que la première extrémité de la première bague 102 soit au contact de ladite embase 101, et de sorte que les deux bagues 102 et 103 soient en contact via leurs faces biseautées : la deuxième extrémité de la deuxième bague 103 est située en regard de la deuxième extrémité biseautée de la première bague 102. De façon préférentielle, la première bague 102 et la deuxième bague 103 sont identiques. Le dispositif de réglage100 fonctionne en configuration de Scheimpflug avec des angles d'inclinaison optique importants (jusqu'à un angle maximal de l'ordre de 20°) par rapport à la normale au plan dans lequel s'inscrit le capteur. Avantageusement, la deuxième extrémité biseautée de chaque bague 102, 103 présente une inclinaison de 10° par rapport au plan dans lequel s'inscrit la première extrémité de celles-ci. De préférence, des marquages sont visibles sur la première bague 102 et la deuxième bague 103 pour aider au réglage des rotations des deux bagues 102, 103.

De cette manière, la deuxième extrémité biseautée de la deuxième bague 103 qui est montée en rotation sur la première bague 102, peut être mise en rotation entre une première position extrême comme illustré à la figure 3 correspondant à une inclinaison minimale de 0° par rapport à la normale au plan dans lequel s'inscrit le capteur, et une deuxième position extrême comme illustré à la figure 4 correspondant à une inclinaison maximale de 20° par rapport à la normale au plan dans lequel s'inscrit le capteur. La première position extrême correspond à un positionnement des deux bagues 102, 103 pour lequel les deux extrémités biseautées sont diamétralement opposées et se compensent, la deuxième position extrême correspondant à un positionnement des deux bagues 102, 103 pour lequel les deux deuxièmes extrémités biseautées se superposent l'une sur l'autre, leur angle d'inclinaison s'ajoutant. Dans l'ordre des opérations de réglages, et à issue du réglage de la rotation de la deuxième bague 103 sur la première bague 102, le dispositif de réglage100 peut être verrouillé au moyen des vis pointeau 115 situées sur le pourtour de la première bague 102. A l'issue du réglage de la rotation de la première bague 102 sur l'embase 101, le dispositif de réglage 100 peut être verrouillé au moyen des vis pointeau 118 situées sur le pourtour de la première bague 102.

En se référant aux figures 3, 4, 5 et 6, l'embase 101 qui est spécifique à un modèle d'appareil de prises de vues, comme par exemple une caméra rapide dotée d'un gros capteur, est de forme circulaire et possède une ouverture centrale. Cette embase 101 comporte un bord périphérique biseauté possédant des trous 114 destinés à recevoir des vis de fixation.

En se référant aux figures 3, 4, 5 et 6, le dispositif de réglage selon l'invention, comprend une troisième bague 106a, 106b et une quatrième bague 107 montée en rotation sur la deuxième bague 103, ladite troisième bague 106a, 106b étant montée en translation sur la quatrième bague 107 au moyen d'un dispositif en queue d'aronde impliquant une vis sans fin 110. La troisième bague 106a, 106b comprend une partie supérieure 106a et une partie inférieure 106b ayant sensiblement le même diamètre extérieur, chacune desdites deux parties 106a, 106b ayant la forme d'une bague. De cette manière, la troisième bague résulte de la superposition de deux bagues 106a, 106b. La quatrième bague 107 est plane et de faible épaisseur, et est insérée entre la partie inférieure 106b de la troisième bague et la deuxième bague 103. Cette quatrième bague 107, qui a sensiblement les mêmes dimensions que celles de la deuxième bague 103, est donc montée en rotation sur ladite deuxième bague 103 et pivote sur la deuxième bague 103 en demeurant au contact de celle-ci. Cette quatrième bague 107 est fixée à la partie inférieure 106b de la troisième bague 106a, 106b, de sorte qu'un pivotement de la quatrième bague 107 sur la deuxième bague 103 entraine un pivotement simultané dans le même sens et avec la même amplitude, de ladite troisième bague 106a, 106b.Cette troisième bague 106a, 106b se superpose à la deuxième bague 103 par l'intermédiaire de la quatrième bague 107, de sorte que :
- la partie supérieure 106a représente la partie la plus haute de la troisième bague 106a, 106b. Cette partie supérieure 106a est destinée à recevoir l'objectif optique 2. L'objectif optique 2 est ainsi placé dans la partie supérieure 106a de la
   troisième bague 106a, 106b et est ensuite fixé à celle-ci au moyen d'un système de type baïonnette ou quart de tour,
- la partie inférieure 106b soit au contact de ladite quatrième bague 107. Cette troisième bague 106a, 106b a sensiblement le même diamètre interne que celui de la deuxième bague 103, et le même diamètre externe que celui de cette deuxième bague 103. L'un des deux éléments à choisir parmi la partie inférieure 106b de la troisième bague et la quatrième bague 107, présente une nervure dont la section transversale est préférentiellement de forme trapézoïdale, et l'autre élément à choisir parmi la partie inférieure 106b et la quatrième bague 107 présente une rainure dont la section transversale est préférentiellement de forme trapézoïdale. La nervure est insérée dans la rainure et peut se déplacer dans celle-ci au moyen d'une vis sans fin 110, de sorte que cette interaction en queue d'aronde permette un coulissement relatif entre l'élément 106b, 107 portant la nervure et l'autre élément 106b, 107 portant la rainure. La partie supérieure 106a de la troisième bague qui est destinée à recevoir l'objectif optique 2 de la caméra, est montée pivotante sur la partie inférieure 106b de ladite troisième bague. De cette manière, l'objectif optique 2 de la caméra qui est fixé à la partie supérieure 106a de la troisième bague peut tourner suivant l'axe optique pour aligner, entre autres, d'éventuels masques situés à l'arrière de l'objectif optique 2 avec la forme du capteur utilisé dans l'appareil de prises de vues. A l'issue du réglage de la rotation de la partie supérieure 106a de la troisième bague relativement à la partie inférieure 106b, le dispositif de réglage 100 peut être verrouillé au moyen des vis pointeau 117 situées sur le pourtour de la partie inférieure 106b de la troisième bague. Grâce à la présence de la quatrième bague 107 qui est montée pivotante sur la deuxième bague 103 et à laquelle est fixée la troisième bague 106a, 106b, le dispositif en queue d'aronde impliquant une vis sans fin 110 permettant un mouvement en translation de ladite troisième bague 106a, 106b relativement à la deuxième bague 103 par l'intermédiaire de la quatrième bague, peut être mis en rotation jusqu'à ce que l'axe de translation soit aligné avec l'axe de la plus grande pente donné par la combinaison des 2 bagues biseautés 102, 103. Autrement dit, peu importe la position de la troisième bague 106a, 106b relativement à la deuxième bague 103 à l'issue d'un premier réglage impliquant la première bague 102 et la deuxième bague 103, grâce à la rotation possible de la quatrième bague 107 sur la deuxième bague 103, l'axe de translation pourra toujours être positionné suivant la ligne ou l'axe de plus grande pente afin de recentrer l'image formée sur le centre du capteur.

En se référant à la figure 2, un dispositif de réglage100 selon l'invention permet de déplacer un objectif optique 2 d'une caméra 3 pour se placer dans les conditions de Scheimpflug, ledit dispositif 100 étant monté dans la caméra 3 de sorte que :
- l'embase 101 soit arrimée par vissage sur une paroi 109 de la caméra 3 en étant dans la continuité de cette paroi 109, c'est-à-dire sans introduire de reliefs marqués avec celle-ci,
- le capteur soit placé à l'intérieur de la caméra 3 en étant situé d'un côté de l'embase 101, et les différentes bagues 102, 103, 106a, 106b, 107, saillent de l'autre côté de ladite embase 101 en s'étendant vers l'extérieur de ladite caméra 3,
- l'objectif optique 2 de la caméra soit fixé à la partie supérieure 106a de la troisième bague 106a, 106b.

Le réglage du dispositif de réglage 100 pour placer l'objectif optique 2 de la caméra 3 dans une position donnée afin d'appliquer le principe de Scheimpflug, peut être effectué, soit manuellement en ajustant séparément les différentes bagues impliquées, soit de façon motorisée au moyen d'au moins un moteur embarqué dans la caméra 3 ou en supplément, ledit moteur pouvant par exemple être un moteur électrique pour piloter une vis sans fin ou des engrenages pour les rotations.

De façon préférentielle, le dispositif de réglage 100 selon l'invention est réalisé en métal, soit avec le même métal pour toutes les pièces impliquées, à savoir l'embase 101 et les différentes bagues 102, 103, 106a, 106b, 107, soit à partir de différents métaux en fonction des pièces considérées.

De façon avantageuse, le dispositif de réglage 100 selon l'invention est fabriqué à partir d'une impression 3D métallique ou polymère assurant la résistance mécanique adéquate de l'ensemble. Cette impression 3D métallique offre un assemblage anti-déboitement des bagues, les bords des bagues étant emboîtés les uns par rapport aux autres. Cet assemblage des différentes pièces par l'impression 3D métallique rend ce dispositif de réglage100 beaucoup plus simple à régler sans risque de démontage total des pièces si l'on desserre trop les vis pointeau de blocage des rotations.

De façon schématique, la première bague 102 et la deuxième bague 103 ont pour fonction de déplacer l'objectif optique 2 de la caméra 3 de façon à modifier l'orientation de l'axe optique 1 de la caméra par rapport à la normale au capteur. Lorsque cet objectif optique 2 a atteint une inclinaison importante qui est fonction de la position de la première bague 102 et de la deuxième bague 103, il est possible que l'image captée par ledit objectif optique 2 soit très décalée par rapport au centre du capteur. Afin que cette image soit parfaitement centrée sur le capteur, l'objectif optique 2 est translaté au moyen de la vis sans fin 110 incorporée entre la partie inférieure 106b de la troisième bague et la quatrième bague 107. Ce mouvement de translation peut être précédé si nécessaire d'un mouvement de rotation de la quatrième bague 107 autour de la deuxième bague 103 pour amener l'axe de translation le long de l'axe de plus grande pente obtenu par la position de la première bague 102 et de la deuxième bague 103. A l'issue du réglage des différentes rotations et/ou translations, le dispositif de réglage100 peut être verrouillé au moyen des vis pointeau 118, 115, 116, 117 situées sur le pourtour de chacune des bagues 102, 103, 106a, 106b.

Un dispositif de réglage100 selon l'invention est très compact et permet d'utiliser une caméra 3 en la plaçant dans les conditions de Scheimpflug, tout en conservant le tirage nominal et en corrigeant le vignettage induit aux forts angles. L'image obtenue est ainsi de qualité optimisée.

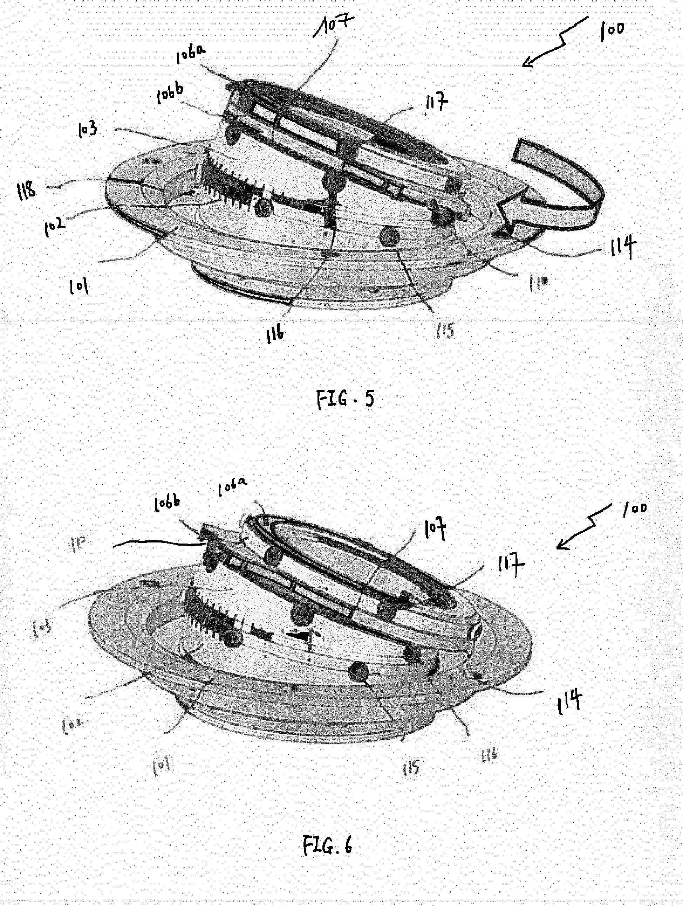

Un procédé de réglage d'un appareil de prises de vues possédant un objectif optique 2, une caméra 3 et un dispositif de réglage100 selon l'invention, ledit procédé comprend les étapes suivantes :
- le dispositif de réglage100 est monté sur la caméra 3 par son embase 101 comme l'illustre la figure 2,
- l'objectif optique 2 est monté sur le dispositif de réglage100 en étant fixé à la partie supérieure 106a de la troisième bague,
- l'angle entre la normale au plan du capteur de la caméra 3 et l'axe optique de l'objectif 2 est réglé par la rotation de la première bague biseautée 102 et de la deuxième bague biseautée 103 comme l'illustrent les figures 3 et 4,
- l'orientation de l'angle ainsi réglé est modifiée par la rotation de la première bague biseautée102 par rapport à l'embase 101,
- pour recentrer l'image obtenue à travers l'objectif optique 2 sur le capteur de la caméra 3, l'objectif optique 2 est décalé grâce à un mouvement de translation de la troisième bague 106a, 106b, sur la quatrième bague 107 dans le sens indiqué par la flèche 200 apparaissant à la figure 4. Ce simple mouvement de translation intervient si à l'issue du réglage de la première bague 102 et de la deuxième bague 103 l'axe de translation est déjà orienté suivant la ligne de plus grande de pente comme cela est illustré aux figures 4 et 6. Si ce n'est pas le cas, comme cela est illustré à la figure 5, le mouvement de translation peut être précédé d'un mouvement de rotation de la quatrième bague 107 pour placer l'axe de translation le long de l'axe de plus grande pente obtenue par la position de la première bague 102 et de la deuxième bague 103 comme cela est illustré à la figure 4,
- enfin, l'orientation suivant l'axe optique de l'objectif optique 2 peut être modifiée grâce à la rotation de la partie supérieure 106a de la troisième bague relativement à la partie inférieure 106b, afin notamment d'aligner les éventuels masques situés à l'arrière de l'objectif optique 2 par rapport au capteur de la caméra 3.

## Revendications

1. Dispositif de réglage (100) d'un objectif optique (2) d'un appareil (3) de prises de vues, conçu pour être monté dans ledit appareil (3) de prises de vues entre un capteur de cet appareil (3) et ledit objectif optique (2), **caractérisé en ce qu'**il comprend une embase (101) de fixation ajourée qui permet de s'adapter spécifiquement à une face avant de l'appareil de prises de vues et deux bagues biseautées, dont une première bague (102) est montée en rotation sur ladite embase (101) et dont une deuxième bague (103) est montée en rotation sur ladite première bague (102), et **en ce que** ladite deuxième bague (103) est destinée à recevoir l'objectif optique (2) de l'appareil (3) de prises de vues.

2. Dispositif de réglage (100) selon l'une quelconque des revendications 1, **caractérisé en ce que** la deuxième bague (103) est au contact de la première bague (102) via leurs faces biseautées respectives et pivote sur ladite première bague (102) en demeurant au contact de celle-ci.

3. Dispositif de réglage (100) selon l'une quelconque des revendications 1 à 2, **caractérisé en ce que** les deux bagues (102, 103) présentent chacune un biseau incliné identique de 10° permettant une variation angulaire maximale de 20° de l'objectif optique (2) par rapport à la normale au plan dans lequel s'inscrit le capteur.

4. Dispositif de réglage (100) selon l'une quelconque des revendications 1 à 3, **caractérisé en ce qu'**il comprend une troisième bague (106a, 106b) destinée à recevoir l'objectif optique (2) et une quatrième bague (107) montée pivotante sur la deuxième bague (103), et **en ce que** la troisième bague (106a, 106b) est montée en translation sur la quatrième bague (107), une mise en rotation de la quatrième bague (107) sur la deuxième bague (103) permettant de placer l'axe de translation entre la troisième bague (106a, 106b) et la quatrième bague (107) le long d'un axe de plus grande pente obtenu par la position de la première bague (102) et de la deuxième bague (103), le mouvement en translation étant destiné à déplacer l'objectif optique (2) pour recentrer en permanence l'image sur le capteur de l'appareil (3) de prises de vues.

5. Dispositif de réglage (100) selon la revendication 4, **caractérisé en ce que** la troisième bague comprend une partie inférieure (106b) qui est montée en translation sur la quatrième bague (107) et une partie supérieure (106a) qui est montée sur ladite partie inférieure (106b), et **en ce que** la partie inférieure (106b) et la partie supérieure (106a) ont chacune la forme d'une bague et sont superposées l'une sur l'autre.

6. Dispositif de réglage (100) selon la revendication 5, **caractérisé en ce que** la partie supérieure (106a) est destinée à recevoir l'objectif optique (2) et possède des moyens de fixation destinés à coopérer avec des moyens de fixation complémentaires dudit objectif optique (2).

7. Dispositif de réglage (100) selon l'une quelconque des revendications 5 ou 6, **caractérisé en ce que** la partie supérieure (106a) de la troisième bague (106a, 106b) est montée en rotation sur la partie inférieure (106b) de ladite troisième bague.

8. Dispositif de réglage (100) selon l'une quelconque des revendications 5 à 7, **caractérisé en ce que** ladite quatrième bague (107) est fixée à la partie inférieure (106b) de la troisième bague (106a, 106b) par un dispositif en queue d'aronde.

9. Dispositif de réglage (100) selon l'une quelconque des revendications 4 à 8, **caractérisé en ce que** la première bague (102), la deuxième bague (103), la troisième bague (106a, 106b) et la quatrième bague (107) sont réalisées en métal.

10. Dispositif de réglage (100) selon l'une quelconque des revendications 4 à 9, **caractérisé en ce que** la première bague (102), la deuxième bague (103), la troisième bague (106a, 106b) et la quatrième bague (107) sont fabriquées au moyen d'une imprimante 3D.

11. Dispositif de réglage (100) selon l'une quelconque des revendications 1 à 10, **caractérisé en ce que** le dispositif de réglage (100) est verrouillé au moyen des vis pointeau (118, 115, 116, 117) situées sur le pourtour de chacune des bagues (102, (103, 106a, 106b), à l'issue du réglage des différentes rotations et/ou translations.

12. Appareil (3) de prises de vues comprenant un capteur, un objectif optique (2) et un dispositif de réglage (100) selon l'une quelconque des revendications 1 à 10, **caractérisé en ce que** l'embase (101) présente une surface externe sur laquelle sont montées la première bague (102) et la deuxième bague (103) biseautées, et une surface interne qui est parallèle à ladite surface externe, et **en ce que** le dispositif de réglage (100) étant monté dans ledit appareil (3) de prises de vues de sorte que la première bague (102), la deuxième bague (103) et l'objectif optique (2) saillent vers l'extérieur de l'appareil (3) de prises de vues et de sorte que la surface interne soit située en regard du capteur.

13. Appareil (3) de prises de vues selon la revendication 11, **caractérisé en ce qu'**il est délimité par un boitier, et **en ce que** l'embase (101) du dispositif de réglage (100) ferme ledit boitier en étant dans la continuité d'une paroi (109) dudit boitier.

14. Procédé de réglage d'un appareil (3) de prises de vues possédant un objectif optique (2), une caméra (3) et un dispositif de réglage (100) selon l'une quelconque des revendications 4 à 9, **caractérisé en ce que** ledit procédé comprend les étapes suivantes :
- le dispositif de réglage (100) est monté sur la caméra (3) par son embase (101) spécifique,
- l'objectif optique (2) est monté sur le dispositif de réglage (100) au niveau de la partie supérieure (106a) de sa troisième bague,
- l'angle entre la normale au plan du capteur de la caméra (3) et l'axe optique de l'objectif (2) est réglé par la rotation des deux bagues biseautées (102, 103),
- l'orientation de l'angle ainsi réglé est modifiée par la rotation de la première bague biseautée (102) par rapport à l'embase (101),
- pour recentrer l'image obtenue à travers l'objectif optique (2) par rapport au capteur de la caméra (3), l'objectif optique (2) est décalé grâce à la translation de la troisième bague (106a, 106b) sur la quatrième bague (107), ledit mouvement en translation pouvant être précédé d'un mouvement de rotation de l'ensemble constitué par la troisième bague (106a, 106b) et la quatrième bague (107) sur la deuxième bague (103, grâce à ladite quatrième bague (107) qui est montée en rotation sur ladite deuxième bague (103),
- enfin, l'orientation de l'objectif optique (2) suivant l'axe optique est modifiée grâce à la rotation de la partie supérieure (106a) sur la partie inférieure (106b), afin notamment d'aligner les masques de l'objectif optique (2) par rapport au capteur de la caméra (3).
